# EUROPÄISCHE PATENTANMELDUNG

(11) **EP 1 013 948 A2**
(43) Veröffentlichungstag der Anmeldung: **28.06.2000**
(21) Anmeldenummer: 00106769.3
(22) Anmeldetag: 21.08.1996
(51) Int. Cl.: F16C 9/02

(54) **Kurbelwellenlagerung für eine Brennkraftmaschine**

(30) Priorität: 06.10.1995 DE 19537191
(62) Teilanmeldung aus: 96113369.1
(71) Anmelder: Dr.Ing. h.c.F. Porsche Aktiengesellschaft, 70435 Stuttgart (DE)
(72) Erfinder: Wüst, Johannes, 82178 Puchheim (DE)

(57) **Zusammenfassung**

Die Erfindung betrifft eine Kurbelwellenlagerung für eine Brennkraftmaschine mit zwei aus einer Leichtmetallegierung gegossenen, miteinander durch Lagerschrauben (5, 6) verbundenen Lagerabschnitten (2, 3), wobei mindestens ein Lagerabschnitt ein Einlegteil (9, 9A, 10, 10A) aus einem eisenmetallischen Werkstoff aufnimmt, in dem ein Teil einer Lagerbohrung (4) zur Aufnahme einer Kurbelwelle ausgebildet ist und daß das Einlegteil (9, 9A, 10, 10A) Bohrungen (7, 8) aufweist, die von den Lagerschrauben (5, 6) durchdrungen sind. Es wird vorgeschlagen, daß die Lagerschrauben (5, 6) sich einerseits an einer Schraubfläche (30, 31) des Umgußteils (12) des Lagerabschnittes (3) abstützen, während sie im gegenüberliegenden Umgußteil (11) des Lagerabschnittes (2) verschraubt sind.

## Beschreibung

Die Erfindung betrifft eine Kurbelwellenlagerung für eine Brennkraftmaschine nach der Gattung des Patentanspruches 1.

Eine derartige Kurbelwellenlagerung für eine Brennkraftmaschine ist beispielsweise aus der DE 34 26 208 C1 bekannt. Die darin beschriebene Kurbelwellenlagerung ist aus einem Kurbelgehäuse und einem Lagerdeckel gebildet. Das Kurbelgehäuse und der Lagerdeckel bestehen aus einem Leichtmetall bzw. einer Leichtmetallegierung, wobei zumindest im Lagerdeckel ein eisenmetallischer Kern integriert ist. Dieser ist beim Herstellen des Lagerdeckels in einem Gießverfahren in das Leichtmetall bzw. die Leichtmetallegierung eingebettet. Der Lagerdeckel kann auch Bestandteil einer das Kurbelgehäuse versteifenden Brücke sein, die mehrere Lagerdeckel beinhaltet und ebenfalls aus Leichtmetall bzw. einer Leichtmetallegierung gefertigt, insbesondere gegossen ist. Der eisenmetallische Kern im Lagerdeckel hat zwei die Lagerschrauben aufnehmende Büchsen, zwischen denen sich ein Querteil erstreckt, in dem die eine Hälfte der Lagerbohrung für einen Kurbelwellenzapfen ausgebildet ist. Die Lagerverschraubung stützt sich dabei direkt an den Büchsen des eisenmetallischen Kerns ab.

Der Erfindung liegt die Aufgabe zugrunde, eine gattungsgemäße Kurbelwellenlagerung so zu verbessern, daß eine hohe Festigkeit bzw. ein erhöhter Formschluß des Verbandes zwischen eisenmetallischem Kern (Einlegteil) und der das Einlegteil aufnehmenden Leichtmetallegierung (Umgußteil) hergestellt ist, wobei gleichzeitig eine hohe Steifigkeit der gesamten Kurbelwellenlagerung bei geringem Gewicht gewährleistet werden soll.

Diese Aufgabe wird erfindungsgemäß mit den Merkmalen des Hauptanspruches gelöst.

Durch die Lagerschraubenkräfte werden das Einlegteil und das Umgußteil auf einander gepresst und damit der Formschluß zwischen beiden Bauteilen erhöht. Damit werden die beim Betrieb der Brennkraftmaschine aufgrund unterschiedlicher Wärmeausdehnungen beider Bauteile erzeugten Dehnungsfugen reduziert. Sind das Einlegteil und das Umgußteil mit Ölbohrungen zur Versorgung der Lagerstelle mit Schmiermittel versehen, werden damit auch die Leckageverluste reduziert.

Weitere vorteilhafte Ausgestaltungen und Weiterbildungen der Erfindung sind in den Unteransprüchen dargestellt.

Durch Ausgestaltung der Einlegteile als profilierte Formteile mit Durchbrüchen und Verdickungen wird der hochfeste Verband mit dem umgebenden Umgußteil (Leichtmetallegierung) der Kurbelwellenlagerung bzw. des jeweiligen Lagerabschnittes sichergestellt. Die Ausbildung eines den jeweiligen Teil der Lagerbohrung umgebenden halbkreisförmigen Trägers gewährleistet ein gleichmäßiges Ausdehnungsverhalten und sichert ein hohes Maß an Lagerrundheit unter allen Betriebsbedinungen.

Durch die hohe Festigkeit des Verbandes zwischen Einlegteil und umgebender Leichtmetallegierung und durch die Formgebung der Einlegteile wird eine sichere Kraftübertragung der Betriebskräfte ins Kurbelgehäuse sichergestellt, obwohl sich zwischen dem eisenmetallischen Werkstoff des Einlegteils und der dieses einbettenden Leichtmetallegierung keine innere Verbindung ergibt. Insbesondere durch die Ausbildung des halbkreisförmigen Trägers und die weitere Formgebung des Einlegteils wird dabei sichergestellt, daß die Fugen zwischen dem eisenmetallischen Einlegteil und der umgebenden Leichtmetallegierung nahezu ausschließlich auf Druck belastet werden.

Ein hohes Maß an Lagerrundheit und eine gleichmäßige Ausdehnung der Lagerbohrung bzw. des Einlegteils werden gewährleistet, wenn dieses zumindest teilweise einen annähernd T-förmigen Querschnitt hat, wobei der halbkreisförmige Träger den Quersteg bildet. Durch gezielte Abstimmung der Querschnitte und Massen des Einlegteils kann dabei sichergestellt werden, daß eine gleichmäßige radiale Ausdehnung unter allen Betriebsbedingungen und Betriebstemperaturen vorherrscht.

Die Festigkeit des Verbandes zwischen dem eisenmetallischen Einlegteil und der dieses aufnehmenden Leichtmetallegierung wird noch einmal erheblich verbessert, wenn die Einlegteile einen mit Abstand zum Träger verlaufenden verdickten Abschnitt aufweisen.

Eine weiterhin verbesserte Verzahnungswirkung der Bauelemente wird erreicht, wenn zumindest ein Teil der Durchbrüche im Einlegteil zwischen dem Träger und dem verdickten Abschnitt angeordnet ist.

Eine hohe Steifigkeit der gesamten Kurbelwellenlagerung wird erreicht, wenn die Lagerschrauben das Einlegteil in einem sockelförmigen Abschnitt durchdringen, der sich vom Träger ausgehend in Richtung der Lagerverschraubung erstreckt.

Der Verband zwischen Einlegteil und der Leichtmetallegierung läßt sich noch einmal vorteilhaft verbessern, wenn das Einlegteil zumindest an zwei gegenüberliegenden Außenseiten mit einem Verzahnungsprofil versehen ist.

Die sockelförmigen Abschnitte, die von den Lagerverschraubungen durchdrungen werden, haben in vorteilhafter Weise senkrecht zur Verschraubungsrichtung stehende Stirnflächen, um eine gezielte Einleitung der Schraubenkräfte sicherzustellen und um Verschiebungskräfte zwischen den beiden Bauelementen zu verhindern.

Das Einlegteil besteht aus einem eisenmetallischem Werkstoff, z.B. Grauguß, geschmiedetem Stahl oder auch aus einem Sinterstahl. Das Einlegteil wird im unbearbeiteten Zustand in eine Kokille eingelegt und mit Leichtmetall bzw. der Leichtmetallegierung umgossen. Dabei ist das Einlegteil nach der Endbearbeitung nicht in allen Bereichen umgossen, insbesondere die halbkreisförmigen Träger liegen an ihren Stirnseiten frei.

Ein Ausführungsbeispiel der Erfindung ist in der nachfolgendenden Beschreibung und Zeichnung näher erläutert. Letztere zeigt in:

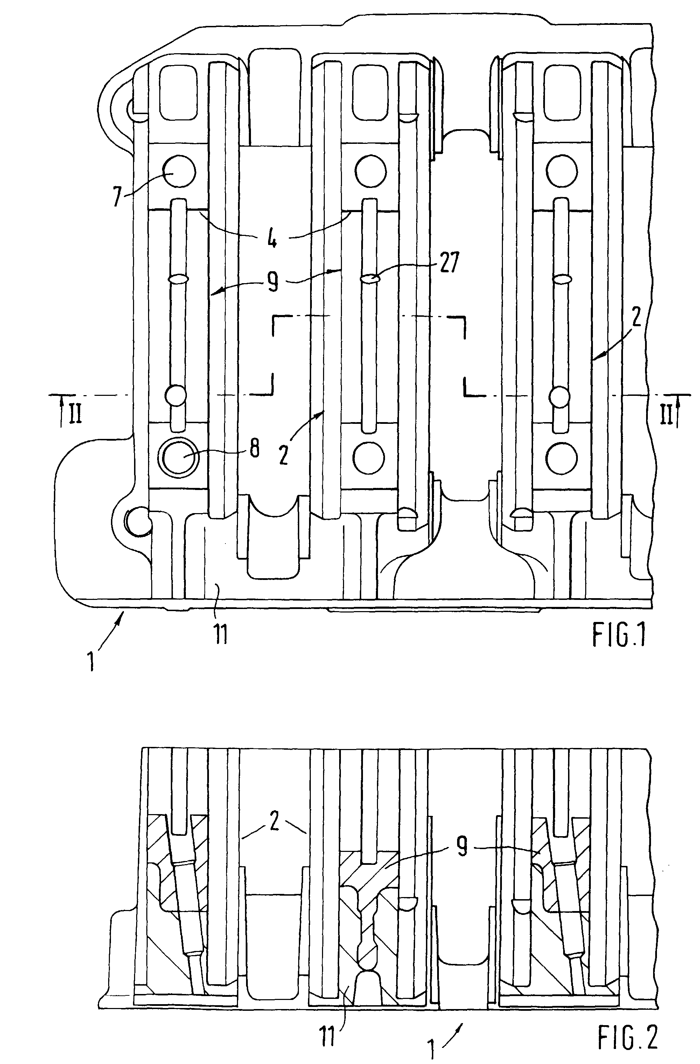

- Fig. 1: eine nur teilweise dargestellte Draufsicht auf eine Hälfte eines Lagergestells mit mehreren Lagerabschnitten,
- Fig. 2: einen Längsschnitt durch das Lagergestell entlang der Linie II-II nach Fig. 1,

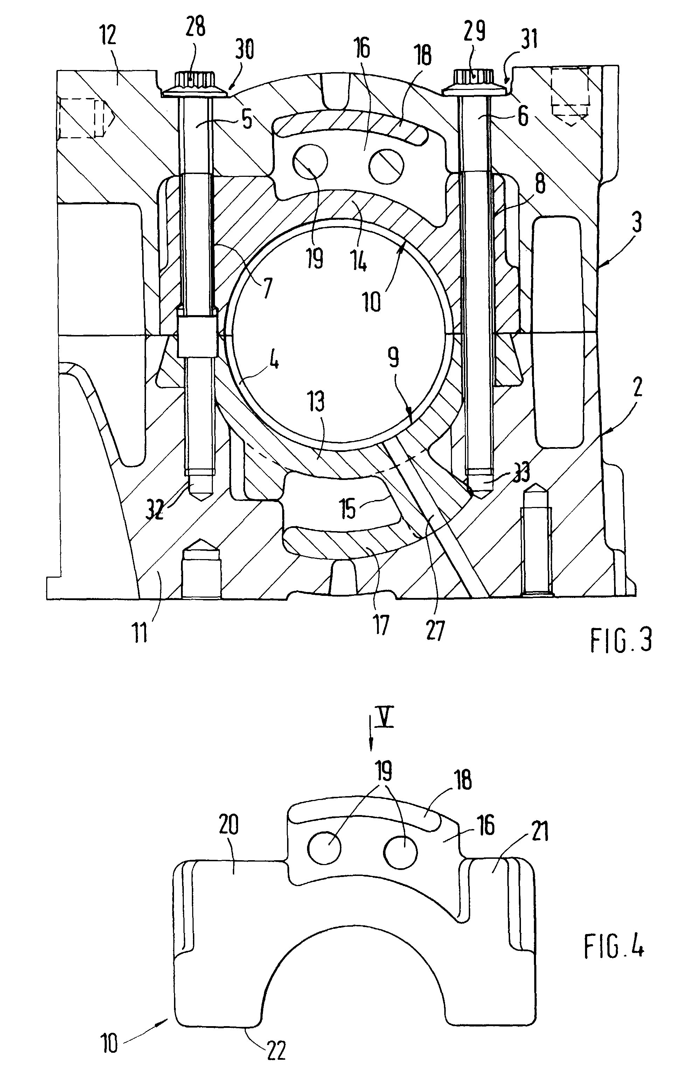

- Fig. 3: einen Querschnitt durch zwei miteinander verbundene, eine Lagerstelle bildende Lagerabschnitte,
- Fig. 4: eine Ansicht eines Einlegteils,

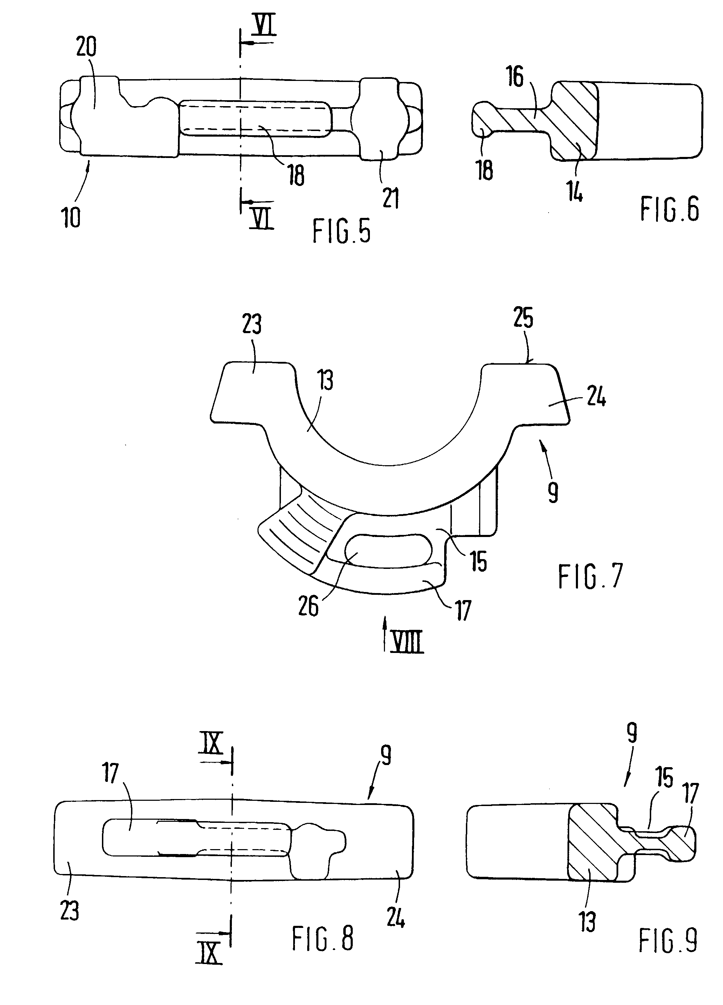

- Fig. 5: eine Draufsicht auf dieses Einlegteil in Pfeilrichtung V nach Fig. 4,
- Fig. 6: einen Querschnitt durch dieses Lagerteil entlang der Linie VI - VI nach Fig. 5,
- Fig. 7: eine Ansicht des zweiten Einlegteiles,
- Fig. 8: eine Draufsicht auf dieses zweite Einlegteil in Pfeilrichtung VIII nach Fig. 7,
- Fig. 9: einen Querschnitt durch dieses zweite Einlegteil entlang der Linie IX - IX nach Fig. 8,

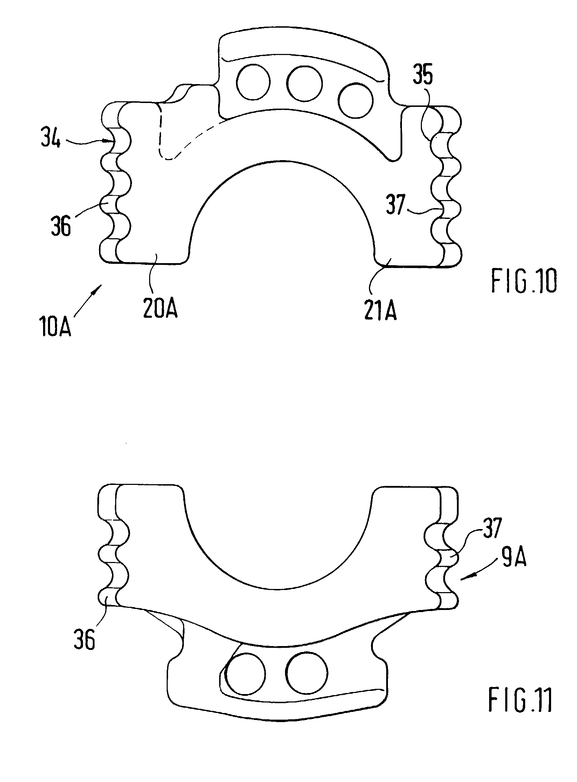

- Fig. 10: eine Ansicht einer Abwandlung des ersten Einlegteils und
- Fig. 11: eine Ansicht einer Abwandlung des zweiten Einlegteils.

Die in diesem Ausführungsbeispiel dargestellte Kurbelwellenlagerung besteht ohne Beschränkung auf diese Ausführungsform aus zwei miteinander verbundenen Lagerbrücken mit einer Vielzahl von Lagerabschnitten, die in das Kurbelgehäuse einer Brennkraftmaschine eingesetzt sind. Jede Lagerbrücke 1 besteht aus einer Vielzahl von hintereinander angeordneten Lagerabschnitten 2, 3 in denen jeweils eine Hälfte einer Lagerbohrung 4 ausgebildet ist, die im zusammengesetzten Zustand jeweils einen Kurbelzapfen der nicht dargestellten Kurbelwelle aufnehmen. Die Verbindung der Lagerabschnitte 2, 3 und damit der beiden Lagerbrücken erfolgt durch Lagerschrauben 5, 6, die in Bohrungen 7, 8 angeordnet sind. Jeder Lagerabschnitt 2, 3 umfaßt ein integriertes Einlegteil 9, 10 aus einem eisenmetallischen Werkstoff, das in ein Umgußteil 11, 12 aus einer Leichtmetallegierung eingebettet ist, das den jeweiligen Lagerabschnitt und die jeweilige Lagerbrücke 1 bildet.

Die Einlegteile 9, 10 bestehen jeweils aus einem halbkreisförmigen Träger 13, 14 in dem der jeweilige Teil der Lagerbohrung 4 ausgebildet ist. Von diesen Trägern 13, 14 geht jeweils ein radial nach außen weisender Steg 15, 16 geringerer Dicke aus, der an seinem radial äußeren Ende einen verdickten Abschnitt 17, 18 aufweist.
Der Steg 16 weist in diesem Ausführungsbeispiel zwei Durchbrüche 19 auf, die nach dem Umgießen mit der Leichtmetallegierung aufgefüllt sind. Das Einlegteil 10 hat weiterhin zwei vom Träger 14 ausgehende sockelförmige Abschnitte 20, 21, zwischen denen die Lagerbohrung 4 angeordnet ist und die zur Aufnahme bzw. Durchführung der Lagerschrauben 5, 6 dienen. Diese sockelförmigen Abschnitte 20, 21 reichen bis zur Stirnseite 22 des Einlegteils 10.

Das Einlegteil 9 hat zwei vom Träger 13 ausgehende radiale Fortsätze 23, 24, die von den Lagerschrauben 5, 6 durchdrungen werden und sich im Bereich der Stirnseite 25 erstrecken. Diese Fortsätze 23, 24 lassen abgeschrägte Seitenflächen, um einen verbesserten Verband bzw. eine Verzahnung mit dem Umgußteil zu erzielen. Im Steg 15 ist ein als Langloch ausgebildeter Durchbruch 26 ausgebildet. Das Einlegteil 9 ist weiterhin mit einer radial verlaufenden Ölbohrung 27 versehen, die in die Umfangsfläche der Lagerbohrung 4 mündet und sich im Umgußteil 11 des Lagerabschnittes fortsetzt. Diese Ölbohrung dient zur Versorgung der Lagerstelle mit Schmiermittel.

Die Lagerschrauben 5, 6 sind so angeordnet, daß ein Lagerabschnitt vollständig durchdrungen wird, wobei die Schraubenköpfe 28, 29 sich an einer äußeren Schraubfläche 30, 31 des Umgußteils 12 dieses Lagerabschnittes 3 abstützen. Die Lagerschrauben durchdringen dabei das Einlegteil 10 im Bereich der sockelförmigen Abschitte 20, 21 und die Fortsätze 23, 24 des Einlegteils 9 und sind in einer das Ende der Lagerbohrung bildenden Sacklochbohrung 33, 34 im Umgußteil 11 des gegenüberliegenden Lagerabschnitt 2 verschraubt.

Die Lagerabschnitte sind nach ihrer Endbearbeitung der Oberflächen so ausgebildet, daß die Stirnseiten der halbkreisförmigen Träger frei liegen, d.h. die Breite b der halbkreisförmigen Träger entspricht der Lagerbreite B des jeweiligen Lagerabschnittes. Die an die halbkreisförmigen Träger anschließenden Stege haben eine geringere Breite und gehen in die verdickten Abschnitte mit einer Breite d über. Die Stege und die verdickten Abschnitte sind jeweils etwa mittig bezogen auf die Lagerbreite B angeordnet und vollständig in das Umgußteil eingebettet.

Bei den mit 9A und 10A bezeichneten Abwandlungen der zuvor beschriebenen Einlegteile sind die sockelförmigen Abschnitte 20A, 21A an ihren Außenseiten 34, 35 mit einem Verzahnungsprofil 36, 37 versehen. Dieses Verzahnungsprofil 36, 37 ist im dargestellten Ausführungsbeispiel wellenförmig ausgebildet, eine andere Formgebung z.B. ein Sägezahnprofil oder eine Rechteckverzahnung ist ohne weiteres möglich. Die Einlegteile 9A und 10A unterscheiden sich darüber hinaus durch die Zahl und Anordnung der Durchbrüche. Weitere Abwandlungen sind ohne weiteres möglich.

## Patentansprüche

1. Kurbelwellenlagerung für eine Brennkraftmaschine mit zwei aus einer Leichtmetallegierung gegossenen, miteinander durch Lagerschrauben verbundenen Lagerabschnitten (2, 3), wobei mindestens ein Lagerabschnitt ein Einlegteil (9, 9A, 10, 10A) aus einem eisenmetallischen Werkstoff aufnimmt, in dem ein Teil einer Lagerbohrung (4) zur Aufnahme einer Kurbelwelle ausgebildet ist und daß das Einlegteil (9, 9A, 10, 10A) Bohrungen (7, 8) aufweist, die von den Lagerschrauben (5, 6) durchdrungen sind, dadurch gekennzeichnet, daß die Lagerschrauben (5, 6) sich einerseits an einer Schraubfläche (30, 31) des Umgußteils (12) des Lagerabschnittes (3) abstützen, während sie im gegenüberliegenden Umgußteil (11) des Lagerabschnittes (2) verschraubt sind.

2. Kurbelwellenlagerung nach Anspruch 1, dadurch gekennzeichnet, daß das Einlegteil (9, 9A, 10, 10A) aus profilierten Formteilen mit Durchbrüchen (19, 26) und Verdickungen (17, 18) besteht.

3. Kurbelwellenlagerung nach Anspruch 1 oder 2, dadurch gekennzeichnet, daß das Einlegteil (9, 9A, 10, 10A) zumindest teilweise einen annähernd T-förmigen Querschnitt aufweist, wobei der halbkreisförmige Träger (13, 14) den Quersteg bildet.

4. Kurbelwellenlagerung nach einem der vorhergehenden Ansprüche, dadurch gekennzeichnet, daß das Einlegteil (9, 9A, 10, 10A) einen mit Abstand zum Träger (13, 14) verlaufenden verdickten Abschnitt (17, 18) aufweist.

5. Kurbelwellenlagerung nach Anspruch 4, dadurch gekennzeichnet, daß zumindest ein Teil der Durchbrüche (19, 26) zwischen dem Träger (13, 14) und dem verdickten Abschnitt (17, 18) angeordnet sind.

6. Kurbelwellenlagerung nach einem der vorangehenden Ansprüche, dadurch gekennzeichnet, daß das Einlegteil (9A, 10, 10A) jeweils einen die Lagerschraube (5, 6) aufnehmenden sockelförmigen Abschnitt (20, 20A, 21, 21A) aufweist, der sich vom Träger (13, 14) ausgehend in Richtung der Lagerverschraubung erstreckt.

7. Kurbelwellenlagerung nach Anspruch 2, dadurch gekennzeichnet, daß die Durchbrüche (19) zwischen den sockelförmigen Abschnitten (20, 20A, 21, 21A) vorgesehen sind.

8. Kurbelwellenlagerung nach einem der vorangehenden Ansprüche, dadurch gekennzeichnet, daß vom halbkreisförmigen Träger (13, 14) des Einlegteiles (9, 9A, 10, 10A) ausgehend parallel zur Stirnseite (26) verlaufende Fortsätze (23, 24) angeformt sind, die von den Lagerschrauben (5, 6) durchdrungen sind.

9. Kurbelwellenlagerung nach einem der vorangehenden Ansprüche, dadurch gekennzeichnet, daß das Einlegteil (9A, 10A) an seiner gegenüberliegenden Außenseite (34, 35) mit einem Verzahnungsprofil (36, 37) versehen ist.

10. Kurbelwellenlagerung nach einem der vorangehenden Ansprüche, dadurch gekennzeichnet, daß die Lagerschrauben (5, 6) in Sacklochbohrungen (32, 33) im Umgußteil (11) verschraubt sind, die als Verlängerungen der Bohrungen im Einlegteil (9, 9A 10, 10A) ausgebildet sind.

11. Kurbelwellenlagerung nach einem der vorangehenden Ansprüche, dadurch gekennzeichnet, daß die Breite (b) des halbkreisförmigen Trägers (13, 14) zumindest annähernd der Lagerbreite (B) des jeweiligen Lagerabschnittes entspricht.

12. Kurbelwellenlagerung nach einem der vorangehenden Ansprüche, dadurch gekennzeichnet, daß die Breite (d) des verdickten Abschnittes (17, 18) kleiner als die Lagerbreite (B) ist, und daß der verdickte Abschnitt (17, 18) etwa mittig bezogen auf die Lagerbreite (B) im Lagerabschnitt eingebettet ist.

13. Kurbelwellenlagerung nach einem der vorangehenden Ansprüche, dadurch gekennzeichnet, daß im Einlegteil (9) eine Ölbohrung (27) zur Versorgung der Lagerstelle mit Schmiermittel vorgesehen ist.
